(19) Europäisches Patentamt

European Patent Office

Office européen des brevets

(11) EP 1 125 635 A1

(12) DEMANDE DE BREVET EUROPEEN

(43) Date de publication:
22.08.2001 Bulletin 2001/34

(21) Numéro de dépôt: 01400283.6

(22) Date de dépôt: 05.02.2001

(51) Int Cl.⁷: B01J 29/14, B01J 29/06,
B01D 53/86, B01J 29/072,
B01D 141/00, B01J 103/10,
B01J 103/18, B01J 103/26

(84) Etats contractants désignés:
AT BE CH CY DE DK ES FI FR GB GR IE IT LI LU
MC NL PT SE TR
Etats d'extension désignés:
AL LT LV MK RO SI

(30) Priorité: 08.02.2000 FR 0001525

(71) Demandeur: CECA S.A.
92800 Puteaux (Hauts de Seine) (FR)

(72) Inventeurs:
• Plee, Dominique
  64140 Lons (FR)
• Kieger, Stéphane
  67500 Haguenau (FR)

(74) Mandataire: Treuil, Claude et al
Atofina
Département Propriété Industrielle
4-8 cours Michelet
La Défense
92091 Paris La Défense Cedex (FR)

(54) **Zeolite, process for making the zeolite and selective catalytic reduction process using the zeolite for removing nitrogen oxides from gases**

(57) On utilise comme catalyseurs SCR non générateurs de protoxyde d'azote des zéolites agglomérées partiellement échangées au cuivre, en particulier des faujasites, dans lesquelles le cuivre n'occupe pas les petites cages (par exemple les cages sodalites des faujasites). Une attention particulière est portée à certaines zéolites mixtes terre rares / cuivre.

**Description**

La présente invention a trait à la destruction des oxydes d'azote dans les gaz tels que les gaz de combustion ou les effluents des ateliers de synthèse de l'acide nitrique, selon le procédé de réduction catalytique sélective (SCR, mis pour selective catalytic reduction) par l'ammoniac.

Il est connu que l'on peut réduire les oxydes d'azote (NO et $NO_2$ ci-après NOx) en azote $N_2$ par réduction sélective par l'ammoniac (Bosch H. et Janssen F., Catal. Today, 1988, 369) et éliminer ainsi des gaz rejetés à l'atmosphère ces composés que l'on sait contribuer à la formation des brouillards photochimiques et des pluies acides.

La réduction des NOx emprunte pour l'essentiel les réactions obéissant aux bilans globaux suivants :

$$4 \, NO + 4 \, NH_3 + O_2 \rightarrow 4 \, N_2 + 6 \, H_2O$$

$$2 \, NO_2 + 4 \, NH_3 + O_2 \rightarrow 3 \, N_2 + 6 \, H_2O$$

$$NO + NO_2 + 2 \, NH_3 + O_2 \rightarrow 2 \, N_2 + 3 \, H_2O$$

qui se développent catalytiquement. Parmi les catalyseurs exploités, l'industrie a notamment retenu les faujasites cubiques (FAU) échangées au cuivre (brevets EP 0483201 et US 5,536,483), qui présentent une excellente activité dans la fenêtre de températures 250-400°C et qui sont particulièrement bien adaptées au traitement des gaz de queue de la plupart des ateliers d'acide nitrique. Jusqu'à un passé récent, on ne s'était guère inquiété de la présence de protoxyde d'azote ($N_2O$) dans ces rejets mais on s'est depuis rendu compte de sa contribution à l'effet de serre. Son élimination est alors devenue une préoccupation des services publics et des industriels. Il se trouve que les gaz traités par SCR à l'ammoniac sur la plupart des catalyseurs de l'art antérieur, notamment sur les faujasites Y échangées au cuivre, peuvent donner lieu, dans certaines gammes de température, à la formation de $N_2O$.

On sait maintenant, en particulier par l'exploitation des profils de SCR de NOx par $NH_3$, distinguer deux vagues de réduction de NO, respectivement vers 230 °C et vers 325 °C, et l'on peut noter sur ce domaine de température, qu'il se développe également une réaction parasite de réduction du NO en protoxyde d'azote $N_2O$. Il a été possible de corréler cette formation de $N_2O$ à un profil de réduction en température programmée par l'hydrogène (TPR, mis pour temperature programmed reduction) des espèces "cuivre" du catalyseur, selon une méthode qui a été exposée dans "Characterized Catalysts via Temperature-Programmed Reduction", Chemtech, 1977, 316-302, par Jenkins J.W., McNicol B.D., Robertson S.D., auteurs qui ont développé la technique du TPR avec analyse par cellule catharométrique. Le processus expérimental correspondant est développé ci-après au niveau des exemples.

Les inventeurs de EP-A-914.866 ont ainsi constaté que la proportion et la localisation des ions cuivre au sein de la structure faujasite ne sont pas indifférentes à son activité SCR et à la production parasite de $N_2O$ et ont trouvé une nouvelle famille de zéolites en poudre partiellement échangées au cuivre qui ne génèrent pas de protoxyde d'azote, qui ont un rapport atomique Si/Al compris entre 0,8 et 20, dont l'arrangement structural des tétraèdres $SiO_4$ et $AlO_4$ ménage à la fois des petites cavités accessibles au travers de fenêtres à 6 tétraèdres et de grandes cavités accessibles au travers de fenêtres formées d'au moins 8 tétraèdres, dont le taux d'échange en cuivre est compris entre 5 et 60 %, et qui sont caractérisés par 2 vagues de consommation d'hydrogène en réduction en température programmée, la 1ère vague à une température inférieure à 800°C, la 2ème au-delà de 800°C, la consommation en hydrogène correspondant au pic de la deuxième vague étant sensiblement égale à une demi mole d'hydrogène par mole de cuivre présent dans le solide, la première vague étant composée de deux pics $P_1$ et $P_2$ résolus par déconvolution gaussienne, le rapport $A_1/A_2$ des aires correspondant aux pics $P_1$ et $P_2$ respectivement étant supérieur à 1,5.

Or, toutes les zéolites décrites dans EP 914.866 se présentent sous forme de poudre et ne sont donc pas de bonnes candidates pour fonctionner comme catalyseurs de SCR dans des unités industrielles : en effet, leur trop faible granulométrie est un inconvénient rédhibitoire car elles risquent de se compacter et de bloquer, ou au moins très fortement réduire le flux gazeux à travers de la colonne. En outre, lors de leur manipulation au cours des opérations de chargement et de déchargement du lit de catalyseur, on déplore fréquemment des pertes de charge.

Il existe donc un besoin en catalyseurs de SCR de granulométrie supérieure à celle des poudres, typiquement supérieure à 0,5 mm et ne générant pas de $N_2O$ sur la gamme des températures de fonctionnement de la réduction SCR.

Les hommes de l'art en matière de technologie des zéolites connaissent les techniques conventionnelles pour agglomérer les zéolites. Ces techniques impliquent habituellement le mélange de la zéolite en poudre avec un liant, par exemple une argile, transformant le mélange en un aggloméré, de manière type par extrusion ou formation de billes, et le chauffage du mélange zéolite/liant formé à une température de 600-700 °C environ pour convertir l'aggloméré vert en un aggloméré résistant à l'écrasement.

Les inventeurs de la présente invention ont donc tenté d'agglomérer une zéolite mixte telle que revendiquée dans EP 914.866 avec un liant selon la technique décrite ci-dessus, l'ont mis en oeuvre dans un procédé SCR et ont constaté que sa sélectivité vis-à-vis de la production parasite en $N_2O$ était du même ordre de grandeur que celle de la zéolite de même structure cristalline mais non agglomérée.

La présente invention a pour objet des agglomérés zéolitiques qui ont la même efficacité catalytique pour les procédés SCR que les poudres de zéolite revendiquées dans EP 914.866 mais ne présentent pas les inconvénients des produits pulvérulents.

Les agglomérés selon l'invention ont une granulométrie moyenne comprise entre 0,5 et 15 mm et sont à base de zéolite répondant à la formule générale

$$Cu(x)M'(y)M(z) \; Z$$

dans laquelle

- Z représente un réseau zéolitique avec un rapport atomique Si/Al compris entre 0,9 et 20,
- M' est le lithium et/ou un élément métallique de valence 2, 3 ou 4, de diamètre ionique compris entre 0,12 et 0,30 nm, de préférence Ca, lanthanides ou terres-rares (TR) et/ou baryum,
- M est $H^+$, $Na^+$ et/ou $K^+$, de préférence $Na^+$
- x, y et z sont les taux d'échange théoriques respectifs en ions cuivriques et en ions M' et M, exprimés en pour-cent de la capacité totale d'échange du réseau zéolitique Z,

    x, y et z ayant les valeurs suivantes

$$5 \leq x \leq 60,$$

$$20 \leq y \leq 70,$$

$$z = 100 - x - y.$$

- dont l'arrangement structural des tétraèdres $SiO_4$ et $AlO_4$ ménage à la fois des petites cavités accessibles au travers de fenêtres à 6 tétraèdres et de grandes cavités accessibles au travers de fenêtres formées d'au moins 8 tétraèdres,
- dont la majeure partie des cations M' se situe dans les petites cavités, appelées cages sodalite ou cages β, et la majeure partie des ions cuivriques se situe dans les grandes cavités
- caractérisé par deux vagues de consommation d'hydrogène en réduction en température programmée, la première vague à une température inférieure à 800°C, la deuxième au-delà de 800°C,

    la consommation en hydrogène correspondant au pic de la deuxième vague étant sensiblement égale à une demi mole d'hydrogène par mole de cuivre présent dans le solide,
    la première vague étant composée de deux pics

$P_1$ et $P_2$ résolus par déconvolution gaussienne, le rapport $A_1/A_2$ des aires correspondant aux pics $P_1$ et $P_2$ respectivement étant supérieur à 1,5,

        et d'un liant.

Le liant d'agglomération représente en général de 5 à 30 parties en poids pour 100 parties d'aggloméré.

Les liants utilisés pour agglomérer les agglomérés selon l'invention peuvent inclure les argiles, les silices, les alumines, les oxydes métalliques et leurs mélanges.

En outre, les agglomérés peuvent être préparés avec des liants mixtes tels que silice-alumine, silice-magnésie, silice-zircone, silice-thorine, silice-oxyde de béryllium et silice-dioxyde de titane, ainsi qu'avec des compositions ternaires telles que silice-alumine-thorine, silice-alumine-zircone et des argiles présents comme liants.

Parmi les zéolites Z , on peut citer la faujasite cubique (FAU), la faujasite hexagonale EMT, les intercroissances de faujasite cubique et hexagonale, la zéolite L, l'offrétite.

Les zéolites agglomérées préférées sont celles pour lesquelles la zéolite Z est une faujasite cubique X ou Y de Si/Al compris entre 0,9 et 3, et plus particulièrement les faujasites CaCuY agglomérées et les faujasites TRCuY agglomérées.

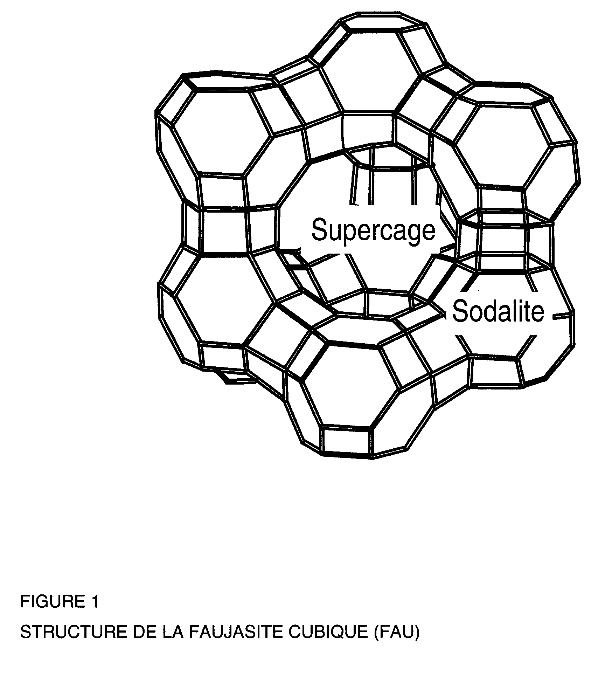

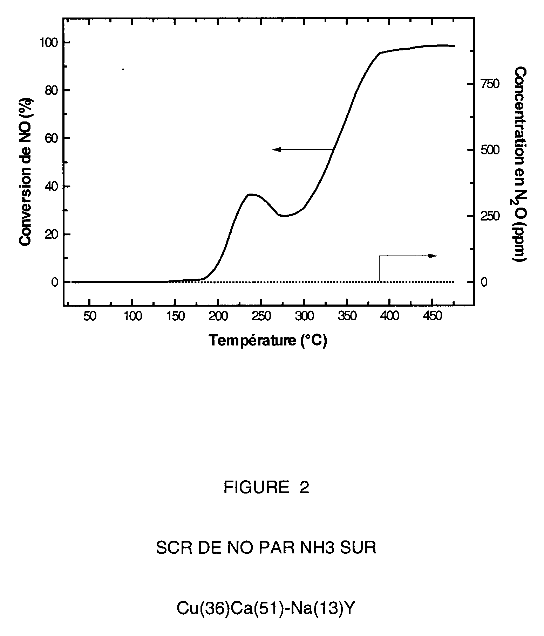

La figure 1 représente la structure d'une faujasite cubique Y dans laquelle on distingue un agencement de tétraèdres $SiO_4/AlO_4$ en cuboctaèdres appelés cages sodalite ou cages β, communiquant par des prismes hexagonaux et délimitant dès cavités plus vastes, les cages α ou supercages. Il y a 16 prismes hexagonaux, 8 cages sodalite et 8 supercages par maille cristalline de faujasite cubique.

Les inventeurs ont mis au point 3 procédés pour préparer les agglomérés selon l'invention qui ne génèrent pratiquement pas de $N_2O$ lorsqu'ils sont mis en oeuvre dans un procédé SCR.

Le 1er procédé, objet de la présente invention, comprend les étapes suivantes :

    a-1) échange d'une partie des sites échangeables d'une zéolite M. Z en poudre avec au moins un premier cation M' destiné à occuper surtout les cages sodalite, de préférence $Ca^{2+}$, un cation lanthanide et/ou $Ba^{2+}$, puis,
    b-1) agglomération au moyen d'un liant puis calcination de l'agglomérat vert pour le transformer en agglomérat ayant la granulométrie souhaitée, puis,
    c-1) échange au cuivre d'une partie des cations échangeables de la zéolite agglomérée issue de l'étape b-1) puis,
    d-1) éventuellement traitement thermique tel que séchage et activation.

Le 2nd procédé, objet de la présente invention, comprend les étapes suivantes :

a-2) échange d'une partie des sites échangeables d'une zéolite M. Z en poudre, qui n'a pas subi de traitement d'activation, avec au moins un premier cation M' destiné à occuper surtout les cages soda-lite, de préférence $Ca^{2+}$, un cation lanthanide et/ou $Ba^{2+}$, puis,

b-2) éventuellement traitement thermique tel que séchage et activation, puis,

c-2) échange au cuivre d'une partie des cations échangeables de la zéolite issue de l'étape b-2), puis,

d-2) agglomération au moyen d'un liant,

e-2) traitement thermique tel que séchage et activation.

Le 3ème procédé, objet de la présente invention, comprend les étapes suivantes :

a-3) agglomération au moyen d'un liant d'une zéolite M. Z en poudre puis calcination de l'aggloméra t vert pour le transformer en aggloméra t ayant la granulométrie souhaitée, puis,

b-3) échange d'une partie des sites échangeables de la zéolite de l'aggloméra t, avec au moins un cation M' destiné à occuper surtout les cages sodalite, de préférence $Ca^{2+}$, un cation lanthanide et/ou $Ba^{2+}$, puis

c-3) éventuellement calcination, puis,

d-3) échange au cuivre d'une partie des cations échangeables de la zéolite agglomérée issue de l'étape c-3), puis,

e-3) traitement thermique tel que séchage et éventuellement activation.

Parmi les 3 procédés détaillés ci-dessus, le 1er procédé est particulièrement préféré par la demanderesse car il est le plus économe énergétiquement, nécessite une quantité moindre de cuivre pour le même taux d'échange du produit final visé et est plus facile à piloter dans la mesure où le pH est plus facile à ajuster lorsque l'échange cuivre est effectué sur des grains plutôt que sur des poudres comme dans les 2ème et 3ème procédés.

L'invention a également pour objet un procédé de réduction catalytique des oxydes d'azote consistant à utiliser un aggloméré zéolitique tel que défini plus haut comme catalyseur.

Le procédé de traitement des gaz par réduction catalytique sélective des oxydes d'azote dans les gaz oxygénés en contenant, qui selon l'invention ne génère pas de protoxyde d'azote, et qui consiste à faire passer lesdits gaz, qui dans le cas des effluents des ateliers d'acide nitrique contiennent NOx de 0,02 à 0,6 %, $O_2$ de 1,5 à 3, %, $H_2O$ de 0,3 à 2,5 %, à des températures comprises entre 180 et 500 °C, sous des pressions totales comprises entre la pression atmosphérique et 1,5 MPa, sur un catalyseur dit SCR, est adapté très simplement du procédé de l'art antérieur, par remplacement pur et simple du catalyseur conventionnel par le catalyseur de l'invention.

Les exemples qui suivent, non limitatifs, feront mieux comprendre l'invention.

## EXEMPLES

Dans tous ces exemples, le respect du pH et des concentrations en cuivre est essentiel pour éviter la précipitation d'oxyde de cuivre sur le solide. On apprécie le degré de précipitation en calculant le bouclage cationique, c'est-à-dire la somme des équivalents représentés par chaque cation échangeable par rapport à la capacité d'échange de la zéolite. Si ce chiffre dépasse 100 %, cela signifie qu'une partie des cations ne participe pas à la compensation cationique du réseau et se trouve sous forme d'oxyde précipité.

Exemple 1 comparatif (préparation d'un catalyseur Cu-Ca-NaY selon EP 914.866)

On prépare une faujasite mixte Cu(36)Ca(51)-NaY selon le mode opératoire détaillé ci-dessous :

1) mise en solution de 0,74 g de nitrate de calcium dans une solution aqueuse de 500 ml à pH = 7,

2) ajout de 2 g de zéolite sodique Y (Na : 100 %) commercialisée par la société PQ Corp sous la dénomination CBV 100,

3) agitation pendant 24 heures à température ambiante,

4) filtration et lavage du gâteau avec 100 ml d'eau à pH = 7,

5) séchage à 80 °C pendant 1 h puis calcination à 500 °C pendant 24 h

6) mise en solution de 0,8 g de nitrate de cuivre dans une solution aqueuse à pH = 5,

7) ajout du gâteau obtenu en 4),

8) agitation pendant 24 heures à température ambiante,

9) filtration et lavage du gâteau avec 100 ml d'eau à pH = 5,

10) séchage du gâteau à 80 °C pendant environ 1 h,

11) calcination du solide par montée en température de l'ambiante à 500°C, à raison de 3°C/min, maintien 24 heures à 500°C.

On obtient une poudre qui se révèle à l'analyse avoir la composition d'une Cu(36)Ca(51)-NaY.

Le profil SCR NO, interprété en sélectivité $N_2O$ montre l'absence de $N_2O$ avec la Cu(36)Ca(51)-NaY selon EP 914.866 (figure 2).

Exemple 2: CuCa-NaY selon l'invention (2ème procédé)

On prépare une zéolite doublement échan-gée selon le mode opératoire détaillé à l'exemple 1 mais avec un taux d'échange en calcium de 43 % et un taux d'échange en cuivre de 36 %.

A partir de l'analyse chimique, on calcule que la somme des équivalents Ca+Cu+Na est d'environ 100 %, ce qui montre qu'il n'y a pas d'oxyde de cuivre précipité sur la surface des cristaux de la zéolite.

La poudre obtenue est ensuite agglomérée sous forme d'extrudés de 3,2 mm de diamètre avec un liant argileux, ledit liant reprsésentant 15 % en poids du poids total de l'extrudé. Après séchage à 80°C environ 1h en étuve ventilée et activation thermique à 500°C pendant 1 heure, on procède à un test catalytique dont les conditions sont :

> T = 200 °C
> P = 0,5 MPa
> VVH = 20.000 h$^{-1}$
> NOx = 4000 ppm
> Le taux de conversion en NOx est de 99 % sans formation notable de $N_2O$.

Exemple 3 (comparatif témoin)

On opère l'échange calcique puis cuivrique d'une poudre de zéolite Y CBV 100 en respectant le mode opératoire suivant :

- a/ échange calcique en dispersant 40 g de zéolite Y dans 1 litre d'eau contenant 5 g de $CaCl_2$ (ceci correspond à une multiplication par 10 des concentrations en zéolite de l'exemple 1) pendant 1 heure à température ambiante,
- b/ filtration et lavage avec 800 ml d'eau,
- c/ séchage à 80°C pendant 1 heure,
- d/ calcination à 500°C pendant 1 heure de la poudre obtenue,
- e/ échange cuivrique de la zéolite calcinée issue de l'étape d/ dans 1000 ml d'une solution de nitrate de cuivre 0,066 M (soit 78 % de la capacité d'échange de la zéolite),
- f/ filtration et lavage avec 800 ml d'eau,
- g/ agglomération avec un liant argileux à raison de 20% en poids sous forme d'extrudés de 3,2 mm de diamètre,
- h/ séchage à 80°C pendant 1 h et activation thermique à 500 °C pendant 1 h.

Le solide a la composition : Cu(67)Ca(40)Na (28)Y et présente un bouclage cationique de 135%, ce qui indique que seulement 50 % du cuivre se trouve en position d'échange, le reste étant précipité à la surface des cristaux.

Le test catalytique décrit à l'exemple 2 donne un résultat de conversion en NOx de 94 % avec une formation de $N_2O$ de 700 ppm, ce qui est loin d'être négligeable.

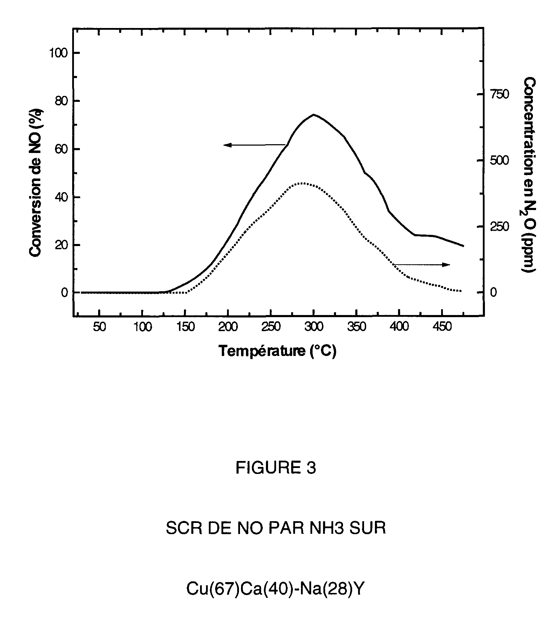

La figure 3 des profils SCR NO/$N_2O$ montre une forte production de $N_2O$.

Exemple 4 CuCa-NaY selon l'invention (3ème procédé)

On effectue la préparation d'un échantillon de zéolite CuCaY agglomérée selon le mode opératoire suivant :

- on agglomère au moyen d'un liant argileux la poudre de zéolite CBV 100 sous forme d'extrudés de 3,2 mm diamètre (les extrudés contiennent 15 % en poids de liant) ;
- on sèche à 80°C les extrudés que l'on calcine ensuite à 550°C pendant 2 heures pour leur conférer de la résistance mécanique ;
- on procède ensuite à un échange calcique en mettant en contact 150 g de grains de zéolite et 1000 ml d'une solution contenant 16 g de $CaCl_2$ (réactif plus acceptable que $Ca(NO_3)_2$ d'un point de vue industriel car il n'occasionne pas de rejets de nitrates) pendant 16 heures à 40°C ;
- on calcine le solide à 500°C pendant 2 heures ;
- on effectue un échange cuivre en mettant 100 g de la zéolite calcique dans 1 l d'une solution de sulfate de cuivre 0,05 M à température ambiante pendant 20 heures ;
- on réalise un séchage et une activation finale à 500 °C pendant 1 heure.

Le produit fini a la composition Cu(22)Ca(37) Y avec un bouclage cationique par rapport à la capacité d'échange de 103 % .

On pratique le même test catalytique que celui décrit à l'exemple 2 et on trouve un taux de conversion en NOx de 99 %, sans formation notable de $N_2O$.

Exemple 5 CuCa-NaY selon l'invention (1er procédé)

On effectue la préparation d'un catalyseur selon l'invention de la manière suivante :

- on échange la poudre de zéolite Y CBV 100 de PQ au moyen d'une solution de chlorure de calcium en dispersant 125 g de zéolite dans 1 l d'eau et en ajoutant 16 g de $CaCl_2$. On maintient à température ambiante pendant 3 heures, puis on effectue une filtration et un lavage avec environ 2 litres d'eau. La zéolite présente, à cette étape, un taux d'échange Ca de 41,6 %.
- on procède ensuite à une agglomération sous forme d'extrudés de 3,2 mm de diamètre au moyen d'un liant argileux (les extrudés contiennent 20 % en poids de liant);
- on sèche à 80°C et on active pendant 2 heures à 550 °C ;
- on échange alors les grains ainsi calcinés par une solution de sulfate de cuivre à température ambiante en mettant en contact 100 g de zéolite calcique et 1 litre d'une solution à 0,05 M en cuivre ;
- on filtre et on lave avec 1,5 litres d'eau ;

- on sèche et on active à 550°C pendant environ 2 h.

Le produit fini a la composition Cu(22)Ca(40) Y avec un bouclage cationique par rapport à la capacité d'échange de 102 %.

Le test catalytique effectué dans les mêmes conditions que celles de l'exemple 2 fournit un résultat de conversion de NOx de 99% sans formation notable de $N_2O$.

Exemple 6 CuCa-NaY selon l'invention (1er procédé)

On prépare un catalyseur selon l'invention en reprenant le mode opératoire décrit à l'exemple 5 à l'exception de l'échange cuivrique qui est effectué de manière dynamique en faisant passer à 80 °C, sur une colonne verticale remplie de grains de zéolite calcique une solution constituée de $CuSO_4$, NaCl et $CaCl_2$, de manière à respecter une fraction équivalente en cuivre de 0,2 (calculée comme le rapport du nombre d'équivalents cuivre divisé par la somme du nombre d'équivalents du milieu Ca + Na +Cu ). La quantité passée correspond à 1,8 fois la stoechiométrie d'échange en cuivre nécessaire.

On répète l'opération avec 3 fois la quantité stoechiométrique nécessaire.

Les catalyseurs résultant de ces opérations présentent respectivement les compositions suivantes : Cu(15)Ca(38) Y et Cu(24)Ca(34) Y avec dans les deux cas, un bouclage cationique de l'ordre de 102-103 %.

Les tests catalytiques pratiqués selon les conditions de l'exemple 2 conduisent à un résultat de conversion en NOx de 99 % sans formation notable de $N_2O$.

**Revendications**

1. Zéolite mixte représentée par la formule Cu(x)M'(y) M(z) Z dans laquelle

   - Z représente un réseau zéolitique avec un rapport atomique Si/Al compris entre 0,9 et 20,
   - M' est le lithium et/ou un élément métallique de valence 2, 3 et/ou 4, d'un diamètre ionique compris entre 0,12 et 0,30 nm,
   - M est $H^+$, $Na^+$ et/ou $K^+$,
   - x, y et z sont les taux d'échange théoriques respectifs en ions cuivriques et en ions M' et M, exprimés en pour-cent de la capacité totale d'échange de ladite faujasite,

   x, y et z ayant les valeurs suivantes :

   $$5 \leq x \leq 60,$$

   $$20 \leq y \leq 70,$$

   $$z = 100 \text{ -x -y,}$$

   ladite zéolite étant caractérisée par deux vagues de consommation d'hydrogène en réduction en température programmée, la première vague à une température inférieure à 800°C, la deuxième au-delà de 800°C, la consommation en hydrogène correspondant au pic de la deuxième vague étant sensiblement égale à une demie mole d'hydrogène par mole de cuivre présent dans le solide, la première vague étant composée de deux pics $P_1$ et $P_2$ résolus par déconvolution gaussienne, le rapport $A_1/A_2$ des aires correspondant aux pics $P_1$ et $P_2$ respectivement étant supérieur à 1,5 et agglomérée avec un liant sous forme d'agglomérés de granulométrie moyenne au moins égale à 0,5 mm.

2. Zéolite mixte Cu(x)M'(y)M(z) Z selon la revendication 1, dans laquelle Z est une faujasite X ou Y.

3. Zéolite mixte Cu(x)M'(y)M(z) Z selon la revendication 1 ou 2, dans laquelle l'ion M' est un ion calcium.

4. Zéolite mixte Cu(x)M'(y)M(z) Z selon la revendication 1 ou 2, dans laquelle l'ion M' est un ion lanthanide ou terre-rare, ou un mélange d'ions lanthanides.

5. Procédé d'obtention d'une zéolite agglomérée telle que définie aux revendications 1 à 4, qui comprend les étapes suivantes :

   a-1) échange d'une partie des sites échangeables d'une zéolite M. Z en poudre avec au moins un premier cation M' destiné à occuper surtout les cages sodalite, de préférence $Ca^{2+}$, un cation lanthanide et/ou $Ba^{2+}$, puis,
   b-1) agglomération au moyen d'un liant puis calcination de l'aggomérat vert pour le transformer en agglomérat ayant la granulométrie souhaitée, puis,
   c-1) échange au cuivre d'une partie des cations échangeables de la zéolite agglomérée issue de l'étape b-1) puis,
   d-1) éventuellement traitement thermique tel que séchage et activation.

6. Procédé d'obtention d'une zéolite agglomérée telle que définie aux revendications 1 à 4, qui comprend les étapes suivantes :

   a-2) échange d'une partie des sites échangeables d'une zéolite M. Z en poudre, qui n'a pas subi de traitement d'activation, avec au moins un premier cation M' destiné à occuper surtout les cages sodalite, de préférence $Ca^{2+}$, un cation lanthanide et/ou $Ba^{2+}$, puis,

b-2) éventuellement traitement thermique tel que séchage et activation, puis,

c-2) échange au cuivre d'une partie des cations échangeables de la zéolite issue de l'étape b-2), puis,

d-2) agglomération au moyen d'un liant,

e-2) traitement thermique tel que séchage et activation.

7. Procédé d'obtention d'une zéolite agglomérée telle que définie aux revendications 1 à 4, qui comprend les étapes suivantes :

a-3) agglomération au moyen d'un liant d'une zéolite M. Z en poudre puis calcination de l'aggomérat vert pour le transformer en agglomérat ayant la granulométrie souhaitée, puis,

b-3) échange d'une partie des sites échangeables de la zéolite de l'agglomérat, avec au moins un cation M' destiné à occuper surtout les cages sodalite, de préférence $Ca^{2+}$, un cation lanthanide et/ou $Ba^{2+}$, puis

c-3) éventuellement calcination, puis,

d-3) échange au cuivre d'une partie des cations échangeables de la zéolite agglomérée issue de l'étape c-3), puis,

e-3) traitement thermique tel que séchage et éventuellement activation.

8. Procédé de réduction catalytique sélective SCR des oxydes d'azote à l'ammoniac, caractérisé en ce qu'on met en oeuvre une zéolite partiellement échangée au cuivre et agglomérée telle que définie dans les revendications 1 à 4 comme catalyseur.

9. Procédé selon la revendication 8, caractérisé en ce que le catalyseur est une zéolite de formule Cu(x) M'(y)M(z) Z dans laquelle Z représente une faujasite Y.

10. Procédé selon la revendication 8, caractérisé en ce que le catalyseur est une zéolite de formule Cu(x) M'(y)M(z) Z dans laquelle Z représente une faujasite hexagonale EMT.

11. Procédé selon la revendication 8, caractérisé en ce que le catalyseur est une intercroissance de faujasite Y et d'EMT, en particulier les ZSM-3, ZSM-20, CSZ-1, ECR-30.

12. Procédé selon la revendication 8, caractérisé en ce que le catalyseur est une zéolite de formule Cu(x) M'(y)M(z) Z dans laquelle Z représente une zéolite L.

13. Procédé selon la revendication 8, caractérisé en ce que le catalyseur est une zéolite de formule Cu(x) M'(y)M(z) Z dans laquelle Z représente une offrétite.

FIGURE 1

STRUCTURE DE LA FAUJASITE CUBIQUE (FAU)

FIGURE 2

SCR DE NO PAR NH3 SUR

Cu(36)Ca(51)-Na(13)Y

FIGURE 3

SCR DE NO PAR NH3 SUR

Cu(67)Ca(40)-Na(28)Y

**Office européen des brevets**

**RAPPORT DE RECHERCHE EUROPEENNE**

Numéro de la demande

EP 01 40 0283

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | EP 0 914 866 A (GRANDE PAROISSE S.A.) 12 mai 1999 (1999-05-12) * le document en entier * | 1-13 | B01J29/14 B01J29/06 B01D53/86 B01J29/072 |
| A | TORRE-ABREU ET AL: "Characterisation of CuMFI catalysts" APPLIED CATALYSIS B:ENVIRONMENTAL, vol. 12, 12 juin 1997 (1997-06-12), pages 249-262, XP002094744 * le document en entier * | 1 | B01D141/00 B01J103/10 B01J103/18 B01J103/26 |
| A | US 5 716 899 A (GUILE ET AL) 10 février 1998 (1998-02-10) * colonne 1, ligne 6 - colonne 1, ligne 11; exemples 7,20 * | 1,5,7-13 | |
| A | US 5 968 861 A (FEELEY ET AL) 19 octobre 1999 (1999-10-19) * colonne 2, ligne 33 - colonne 4, ligne 63 * | 1,6,8-13 | |
| A | EP 0 667 181 A (TOKYO GAS CO. LTD.) 16 août 1995 (1995-08-16) * page 4, ligne 15 - page 4, ligne 20 * * page 15, ligne 14 - page 15, ligne 51 * | 1,8-13 | **DOMAINES TECHNIQUES RECHERCHES (Int.Cl.7)** B01D B01J |

Le présent rapport a été établi pour toutes les revendications

| Lieu de la recherche | Date d'achèvement de la recherche | Examinateur |
|---|---|---|
| LA HAYE | 28 juin 2001 | Doolan, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**        EP 01 40 0283

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-06-2001

| Document brevet cité au rapport de recherche | | Date de publication | Membre(s) de la famille de brevet(s) | | Date de publication |
|---|---|---|---|---|---|
| EP 914866 | A | 12-05-1999 | FR | 2770418 A | 07-05-1999 |
|  |  |  | US | 6221324 B | 24-04-2001 |
| US 5716899 | A | 10-02-1998 | DE | 69418671 D | 01-07-1999 |
|  |  |  | DE | 69418671 T | 16-12-1999 |
|  |  |  | EP | 0648535 A | 19-04-1995 |
|  |  |  | JP | 7303834 A | 21-11-1995 |
| US 5968861 | A | 19-10-1999 | US | 5776423 A | 07-07-1998 |
| EP 667181 | A | 16-08-1995 | JP | 7222914 A | 22-08-1995 |
|  |  |  | JP | 8038907 A | 13-02-1996 |
|  |  |  | JP | 8112531 A | 07-05-1996 |
|  |  |  | JP | 8155307 A | 18-06-1996 |
|  |  |  | DE | 69519243 D | 07-12-2000 |
|  |  |  | DE | 69519243 T | 08-03-2001 |
|  |  |  | US | 5543125 A | 06-08-1996 |

EPO FORM P0460

Pour tout renseignement concernant cette annexe : voir Journal Officiel de l'Office européen des brevets, No.12/82